# FASCICULE DE BREVET EUROPEEN

(11) **EP 1 140 719 B1**
(45) Date de publication et mention de la délivrance du brevet: **04.09.2002**
(21) Numéro de dépôt: 99970375.4
(22) Date de dépôt: 06.10.1999
(51) Int. Cl.: C03C 8/14

(54) **UTILISATION D'UNE COMPOSITION POUR L'EMAILLAGE, PERMETTANT D'EVITER LES COUPS D'ONGLE ET T LE EMAILLEE OBTENUE**
VERWENDUNG EINER EMAILLIERUNGSZUSAMMENSETZUNG, UNTER VERMEIDUNG VON SCHUPPENBILDUNG UND DARAUS RESULTIERENDES EMAILLIERTES BLATT
USE OF AN ENAMELLING COMPOSITION, ENABLING TO AVOID FISH-SCALES AND RESULTING ENAMELLED SHEET

(30) Priorité: 14.10.1998 FR 9812912
(43) Date de publication de la demande: 10.10.2001
(73) Titulaire: USINOR, 92800 Puteaux (FR)
(72) Inventeur: HEMMEN, Pascale, F-57050 Plappeville (FR); CHOLET, Vincent, F-57070 Metz (FR); VITTER, Gérard, F-38400 Saint Martin d'Hères (FR)
(74) Mandataire: Neyret, Daniel
(86) Numéro de dépôt international: FR9902383
(87) Numéro de publication internationale: WO00021896

(56) Documents cités:
- US-A- 4 624 934
- US-A- 5 154 987
- STREL'NIKOV, V. I. ET AL: "Properties of low-clay enamel slips" STEKLO KERAM. (1983), (12), 11-12 CODEN: STKRAQ;ISSN: 0039-1115, XP002106819 cité dans la demande
- CHEMICAL ABSTRACTS, vol. 124, no. 12, 18 mars 1996 (1996-03-18) Columbus, Ohio, US; abstract no. 153763, PASCUT, MELANIA ET AL: "Production of vitreous inorganic enamel for lubrication in heat treatment of stainless steel and alloy pipes" XP002127097 cité dans la demande & RO 104 774 A (INTREPRINDEREA DU UTILAJ CHIMIC, FAGARAS, ROM.) 1 décembre 1994 (1994-12-01)
- GORDON ANDREW W: "Factors influencing hydrogen-related defects in porcelain enamel coatings" PROCEEDINGS OF THE 56TH PORCELAIN ENAMEL INSTITUTE TECHNICAL FORUM;NASHVILLE, TN, USA MAY 3-6 1994, vol. 15, no. 6, 3 mai 1994 (1994-05-03), pages 25-34, XP002106820 Ceram Eng Sci Proc;Ceramic Engineering and Science Proceedings Nov-Dec 1994 American Ceramic Soc, Westerville, OH, USA

## Description

L'invention concerne une composition et un procédé d'émaillage ainsi qu'une tôle d'acier émaillé.

Pour émailler les tôles, on utilise couramment des compositions d'émaillage à base d'une fritte vitreuse.

La fritte vitreuse est généralement obtenue à partir d'un mélange verrier fondu à haute température et refroidi rapidement sous forme de poudre ou fritte; la fritte obtenue peut être portée à l'état liquide par chauffage à une température supérieure à sa température de transition vitreuse Tg.

Pour ajuster les propriétés de l'émail, on peut rajouter à cette fritte des composés minéraux adaptés, comme de la silice ; ces composés d'adaptation des propriétés doivent rester stables à la température de cuisson de l'émail.

Pour préparer une tôle émaillée, on applique sur la tôle d'acier une composition d'émaillage - par exemple à froid et en barbotine liquide - puis on sèche la tôle ainsi revêtue d'une couche homogène de composition d'émaillage, enfin on cuit la tôle revêtue à une température supérieure à la température de transition vitreuse de la fritte et généralement sous air ambiant.

Quand on cherche à appliquer une couche étanche d'émail sur une tôle d'acier, notamment en vue de la protéger contre la corrosion, on risque souvent de voir apparaître des « coups d'ongle ».

En effet, pendant la cuisson de l'émail jusqu'à des températures pouvant atteindre 850°C, la vapeur d'eau provenant de la couché de composition d'émaillage ou de l'atmosphère du four de cuisson réagit sur le substrat d'acier pour former de l'hydrogène.

Or, dans les conditions thermiques usuelles de cuisson, la solubilité de l'hydrogène dans l'acier peut atteindre des niveaux très élevés et l'hydrogène formé pendant la montée en température diffuse et se solubilise dans l'acier.

Lors de la descente en température, la solubilité de l'hydrogène dans l'acier diminue au point que l'hydrogène dissout tente de s'évacuer.

Mais comme la descente en température est très rapide (généralement supérieure à 50°C/min en début de descente), la couche d'émail est solidifiée (T< Tg) avant que l'hydrogène en sursaturation ait pu s'échapper ; cet emprisonnement de l'hydrogène est particulièrement critique dans le cas de l'émaillage double face.

En effet, si la tôle est émaillée sur ses deux faces, l'hydrogène est alors piégé dans la tôle entre les deux couches d'émail.

On voit alors apparaître, parfois plusieurs heures voire plusieurs jours après la fin de cuisson, des éclatements d'émail sous l'effet de la pression de l'hydrogène sous-jacent, éclatements qui ont généralement la forme de « coups d'ongle ».

Ces risques de coups d'ongle apparaissent notamment sur les nuances d'acier suivantes :
- les aciers dits « calmés aluminium », ne contenant pas de titane ni de niobium comme élément d'addition, dont la fabrication comprend une étape de laminage à chaud suivie d'un bobinage à une température inférieure à 600°C ;
- les aciers dits « calmés aluminium », contenant au plus 0,1% en poids de titane et/ou au moins 0,02% de niobium.

Pour éviter les risques de coups d'ongle, il est connu d'utiliser des nuances particulières d'acier qui ont la propriété de piéger de manière irréversible l'hydrogène formé au cours de la cuisson de l'émail ; à cet effet, on utilise par exemple les nuances d'acier suivantes :
- les aciers dits « calmés aluminium », ne contenant pas de titane ni de niobium comme élément d'addition, dont la fabrication comprend une étape de laminage à chaud suivie d'un bobinage à une température supérieure à 700°C ;
- les aciers dits « calmés aluminium », contenant au moins 0,5% en poids de titane et/ou au plus 0,01% de niobium.

La norme EN 10209, publiée en novembre 1996, fixe un critère d'évaluation dit « TH » de l'émaillabilité d'une nuance d'acier ; selon cette norme, si TH > 100, on ne risque pas de voir apparaître des coups d'ongle après émaillage direct de cette nuance dans des conditions usuelles.

Ainsi, pour éviter le risque de coups d'ongle, on est obligé de se limiter considérablement dans le choix de nuances d'acier ; certains aciers qui possèdent pourtant d'excellentes propriétés mécaniques, comme par exemple une bonne emboutissabilité, ne sont pas émaillables dans des conditions industrielles classiques ; il n'est pas possible, par exemple, d'émailler des aciers contenant 0,05 à 0,15% de niobium, car le niobium agirait, au cours de la cuisson d'émail, comme un piège réversible d'hydrogène, ce qui augmenterait encore le risque de coup d'ongle par rapport à d'autres nuances classiques d'acier.

L'invention a pour but d'éviter cet inconvénient en proposant des compositions spécifiques d'émaillage donnant des émaux suffisamment perméables à l'hydrogène à basse température pour évacuer l'hydrogène qui s'est formé pendant la cuisson de l'émail sur la tôle, qui s'est dissous ou piégé dans l'acier et qui reste ou devient en sursaturation dans l'acier sous la couche d'émail, notamment quand on passe en dessous de la température de transition vitreuse de la fritte.

La température de transition vitreuse de la fritte peut être prise comme repère approximatif de la température en deçà de laquelle la couche d'émail se solidifie au point d'être imperméable à l'hydrogène, du moins pour les compositions d'émaillage de l'art antérieur.

Le document US 4 624 934 décrit une composition comprenant principalement de la poudre de verre et de la poudre réfractaire ; l'exemple 18 divulgue une composition comprenant 20% d'alumine β ; l'utilisation de ces compositions concerne uniquement la fabrication de pièces céramiques massiques et non pas celle de couches d'émail ; ces compositions contiennent une proportion importante d'éléments alcalino-terreux et leur température de transition vitreuse est incompatible avec une utilisation pour l'émaillage de tôle d'acier.

L'article intitulé « Properties of low-clay enamel slip », publié dans STEKLO KERAM. (1983), (12), 11-12, cite l'incorporation d'additifs de broyage comme des argiles réfractaires et d'électrolyte comme du chlorure de potassium (p.593, 1.9), dans une composition liquide d'émaillage (barbotine) afin d'en améliorer la rhéologie et -d'éviter les défauts d'émaillage on comprend immédiatement que l'électrolyte modifie la conductivité de la barbotine liquide à température ambiante sans pour autant avoir une incidence sur celle de l'émail solide à haute température.

L'abrégé n° 153763 de C.A. Vol.124, n°12 de l'article intitulé « Production of vitreous inorganic enamel for lubrication in heat treatment of stainless steel and alloy pipes » décrit une fritte contenant 5% d'alumine et 0,5% d'aluminate de sodium, qui sont des composants usuels de verre ou d'émaux, dont la conductivité n'est ni protonique ni protonable à haute température.

Dans le but d'éviter les inconvénients précités, l'invention a pour objet un procédé d'émaillage d'une tôle d'acier nu à l'aide d'une composition à base d'une fritte vitreuse, caractérisée en ce que cette composition comprend au moins un composé minéral cristallisé qui est
- stable aux températures usuelles de cuisson de vitrification de ladite composition, et
- conducteur protonique ou protonable de manière à présenter, à 300°C, une conductivité protonique supérieure à 10-6 S.cm⁻¹.

D'autres caractéristiques avantageuses du procédé selon l'invention sont définies dans les revendications dépendantes.

L'invention a également pour objet une tôle d'acier revêtue sur les deux faces d'une couche d'émail étanche comprenant une phase vitreuse dans laquelle sont dispersés des composés minéraux cristallisés, caractérisée en ce que l'un au moins desdits composés présente, à 300°C, une conductivité protonique supérieure à 10-6 S.cm⁻¹ , et est dispersé dans ladite phase vitreuse dans une proportion suffisante pour conférer à ladite couche d'émail une perméabilité à l'hydrogène supérieure à 10-11 g.cm⁻².s⁻¹ dans la gamme des températures comprises entre 300°C et la température de transition vitreuse de ladite phase vitreuse.

D'autres caractéristiques avantageuses de la tôle selon l'invention sont définies dans les revendications dépendantes.

L'invention a également pour objet un procédé d'émaillage sur les deux faces d'une tôle d'acier nu et/ou de préparation d'une tôle d'acier émaillé selon l'invention qui comprend une étape de cuisson de vitrification de composition d'émaillage appliquée sur la tôle caractérisé en ce que
- la teneur en eau de ladite composition d'émaillage dépasse 1% en début de-cuisson et/ou le point de rosée de l'atmosphère de cuisson est supérieur à 5°C ;
- la température atteinte par la tôle pendant ladite étape de cuisson dépasse Ac₁, Ac₁ étant la température de début de transformation de la ferrite en austénite dudit acier ;
- la vitesse de refroidissement de ladite tôle en fin de ladite étape de cuisson est supérieure à 10°C/min. dans l'intervalle de température compris entre la température Ar₁ et la température de transition vitreuse de ladite fritte, Ar₁ désignant la température de fin de transformation de l'austénite en ferrite dudit acier.

Ainsi l'invention recouvre l'utilisation de conducteurs protoniques ou protonables dans une composition d'émail pour l'émaillage des aciers nus, notamment des aciers avec ou sans titane et/ou niobium, dont l'étape de fabrication comprend une température de bobinage, après laminage à chaud, inférieure à 600°C.

L'invention sera mieux comprise à la lecture de la description qui va suivre, donnée à titre d'exemple non limitatif.

La composition d'émaillage selon l'invention est plus particulièrement destinée à l'émaillage de masse ou à l'émaillage de couverte selon le procédé dit « blanc direct », de sorte que l'émail obtenu est en contact direct avec la tôle d'acier.

On prépare la composition'd'émaillage selon l'invention en ajoutant un composé minéral conducteur ionique protonable ou protoné à une composition classique d'émaillage de tôle d'acier ; cette composition classique d'émaillage est une composition adaptée à l'émaillage de masse, ou à l'émaillage de couverte selon le procédé « blanc direct» ; elle est également adaptée pour obtenir une couche étanche d'émail.

Pour obtenir l'effet anti-coup d'ongle souhaité sur des nuances d'acier réputées apporter des risques de coup d'ongle, il convient de choisir un composé minéral suffisamment conducteur de protons dans les conditions de cuisson ; on a observé cet effet anti-coup d'ongle dès lors que le composé minéral ajouté présentait, à 300°C, une conductivité protonique supérieure à 10⁻⁶ S.cm⁻¹.

Dans un composé conducteur ionique protoné, les mécanismes de conduction ionique sont basés sur des mouvements de protons dans la structure cristalline du composé ; ce composé est dit conducteur protonique.

D'autres composés conducteurs ioniques ne sont pas protonés et les mécanismes de conduction ionique sont alors basés sur des mouvements d'autres ions, comme des ions sodium ; un tel conducteur ionique est dit protonable si, en présence d'hydrogène ou de composés comportant des protons et dans des conditions de température correspondant à celles de la cuisson de l'émail, des ions de conductions comme les ions sodium sont échangés avec des protons dans la structure du composé, au point que la conduction devient protonique comme pour un conducteur protonique.

De préférence, la proportion d'additif minéral conducteur protonique ou protonable est comprise entre 2% environ et 25% environ par rapport au poids de fritte dans la composition.

Au delà de 25% d'additif, la composition d'émaillage risque de donner des émaux présentant des défauts d'aspect de surface et/ou des défauts d'adhérence au substrat.

Si la proportion d'additif est inférieure ou égale à 25%, la température de transition vitreuse de la composition d'émaillage selon l'invention correspond approximativement à celle de la composition classique d'émaillage qui sert de base à sa préparation et sa température de cuisson est à peu près inchangée ; ainsi, la température de cuisson des compositions d'émaillage selon l'invention reste en général inférieure ou égale à 850°C.

L'au moins un additif minéral conducteur qu'on ajoute à la composition classique pour former la composition selon l'invention est donc adapté pour former, après cuisson, un conducteur protonique réparti dans la couche d'émail.

Comme additif minéral, on peut utiliser l'alumine β, β' ou β", ou l'oxyde de gallium de structure β, β", ou des composés ayant des structures cristallographiques similaires ; ces additifs sont réputés conducteurs ioniques d'ions sodium, potassium ou argent et sont « protonables» ; en effet, ils sont « protonés » au moment de la cuisson de l'émail sous l'effet de l'hydrogène qui diffuse dans la couche d'émail (craquage de vapeur d'eau et/ou désorption de l'acier) ; ils deviennent donc alors des conducteurs protoniques.

Après préparation de la composition d'émaillage, on l'applique ensuite sur les deux faces d'une tôle d'acier et on la cuit d'une manière connue en elle-même adaptée pour obtenir une tôle d'acier revêtue, sur chaque face, d'une couche étanche d'émail fortement adhérente.

On entend par couche étanche par exemple une couche efficace pour protéger l'acier contre la corrosion.

On constate alors que, même si on utilise une nuance d'acier réputée non émaillable, on parvient, grâce à l'additif ajouté à la composition classique d'émaillage, à obtenir une tôle émaillée sans coups d'ongle dans des conditions classiques de cuisson.

La couche d'émail obtenue ne présente pas de coups d'ongle à condition :
- qu'elle contienne un composé minéral conducteur protonique dont la conductivité protonique mesurée à 300°C est supérieure à 10⁻⁶ S.cm⁻¹,
- et que ce composé soit dispersé dans cette couche dans une proportion suffisante pour conférer à cette couche d'émail une perméabilité à l'hydrogène supérieure à 10⁻¹¹ g.cm⁻².s⁻¹, au moins dans la gamme des températures comprises entre 300°C et Tg, Tg étant la température de transition vitreuse de l'émail.

Ainsi, grâce à l'invention, on évite tout risque d'apparition de coups d'ongle en émaillant, même sur les deux faces, des nuances d'acier qui, selon la norme précitée EN 10209, présentent une valeur de « TH» inférieure à 100.

En particulier, l'invention est avantageusement utilisable sur les nuances d'acier suivantes
- les tôles à froid pour emboutissage, conformes à la norme EN 10130, issues soit de la métallurgie dite « calmée aluminium », soit de la métallurgie dite « sans interstitiels et dopé au titane ».
- les tôles à froid dopées au niobium et les tôles à chaud.

Les exemples suivants illustrent l'invention.

### Exemple 1 :

Cet exemple a pour but d'illustrer comment une composition d'émaillage contenant un conducteur ionique protonable permet de produire sans risque de coups d'ongle une tôle émaillée à partir d'une nuance d'acier réputée non émaillable.

Comme tôle d'acier réputée non émaillable, on utilise une tôle de 1 mm d'épaisseur de nuance IF dopée au titane (IF pour « Intersticial Free » en langue anglaise, qui signifie que l'acier ne contient pratiquement pas d'atomes de carbone placés dans des sites interstitiels).

L'acier IF Ti utilisé ici est conforme à la norme EN 10130 nuance DC06 ; la teneur en titane de cet acier est de l'ordre de 0,050 % en poids.

Dans cet exemple, les échantillons de tôle d'acier sont émaillés par la technique dite « 2 couches, 2 cuissons » qui comprend les étapes suivantes :
- application d'une couche de composition d'émaillage de masse, puis cuisson ;
- application d'une couche de composition d'émaillage de couverte, puis cuisson.

Avant application de la couche d'émaillage de masse, on prépare les deux faces de la tôle à émailler de la manière suivante
- dégraissage dans une solution de dégraissage dénommée commercialement OAKITE à 90°C pendant 10 minutes ;
- décapage dans de l'acide sulfurique à 70°C pendant une durée adaptée pour obtenir un enlèvement de matière de 3 g/m2/face.

On prépare la composition d'émaillage de masse selon l'invention par mélange de 75% en poids d'une composition d'émaillage du commerce avec 25% en poids d'un composé minéral cristallin réputé conducteur ionique protonable.

Comme composition d'émaillage du commerce, on utilise la composition dénommée MS164 de la Société FERRO ; l'analyse chimique de cette composition se présente approximativement comme suit : SiO2 : 47% - B203 : 15% - Na2O : 13% - CaO : 7% - Al2O3 : 6% - K2O : 2% - BaO : 3% - NiO : 1% - CoO : 1% - Li2O : 1% - ZrO2 : 1% - P2O5 : 1% - F : 2%.

La température de transition vitreuse Tg de cette composition est voisine de 475°C.

Comme composé minéral cristallin réputé conducteur ionique, on utilise de l'alumine β et β" , qu'on obtient en faisant réagir à 1500°C environ pendant 2 heures sous air de l'alumine α avec du carbonate de sodium, dans des proportions environ adaptées à la composition de l'alumine β dont la formule s'exprime comme suit : 11 Al₂O₃, 2 Na₂O ; après broyage, plus de 90% des grains du mélange d'alumine β et β" ont une taille comprise entre 1 µm et 4 µm, soit une taille inférieure à 1/5 de l'épaisseur de la couche d'émail que l'on cherche à déposer sur la tôle.

L'alumine β, β" contient donc du sodium et présente une conductivité ionique par les ions Na+ supérieure à 10⁻⁶ S.cm⁻¹ à 300°C et, a fortiori, au delà de cette température ; ce composé minéral est cristallisé ; sa structure et sa composition sont stables jusqu'à au moins 850°C, température qui correspond au maximum des températures de cuisson que l'on rencontre dans l'émaillage des tôles d'acier.

Pour la première couche d'émail de masse, on procède ensuite d'une manière classique pour obtenir une couche étanche d'émail d'une épaisseur de 100 µm environ : application d'une couche crue d'émaillage sur la surface préparée, séchage à 70°C pendant 2 heures, puis cuisson dans des conditions adaptées à la composition dénommée MS 164, en l'occurrence en portant la tôle à 820°C pendant 6,5 minutes environ sous air ambiant.

Les conditions de cuisson sont classiques et susceptibles d'apporter des risques de coups d'ongle, en particulier :
- parce que la teneur en eau de la composition d'émaillage dépasse 1% en début de cuisson et/ou parce que le point de rosée de l'atmosphère du four de cuisson est supérieur à 5°C, ces conditions étant propices à la formation d'hydrogène pendant la cuisson ;
- parce que la température atteinte par la tôle pendant la cuisson dépasse Ac₁, c'est à dire la température de début-de transformation de la ferrite en austénite de la nuance d'acier ; en effet, au delà de cette température, la capacité d'adsorption d'hydrogène de l'acier augmente très fortement ;
- parce que la vitesse de refroidissement est rapide, au point que, la transformation inverse de l'austénite en ferrite étant terminée (température du four < Ar₁), l'hydrogène adsorbé au dessus de la température Ac₁ est maintenant en sursaturation dans la tôle d'acier et n'a pas eu le temps de s'échapper directement avant que la couche d'émail ne soit solidifiée d'une manière étanche (donc dans l'intervalle Ar₁ - Tg) ; ces conditions sont propices à « l'emprisonnement » d'hydrogène dans la tôle d'acier sous la couche d'émail ; ces conditions sont généralement réunies dès lors que la vitesse de refroidissement dépasse 10°C/min. dans l'intervalle Ar₁ - Tg.

Après refroidissement de la tôle d'acier ainsi revêtue d'émail de masse sur ses deux faces, on procède ensuite à un émaillage de couverte à l'aide d'une composition d'émaillage classique dénommée L138 de la Société FERRO, dans les mêmes conditions d'application et de cuisson.

On obtient alors une tôle émaillée sur ses deux faces.

Malgré la nuance d'acier utilisée, malgré des conditions de cuisson propices aux coups d'ongle, la tôle émaillée obtenue selon l'invention ne présente aucun coup d'ongle.

Par comparaison, on a préparé une tôle émaillée dans les mêmes conditions à la différence près que la composition d'émaillage de masse contient 100% de composition MS164 : on obtient alors une tôle émaillée présentant de nombreux coups d'ongle.

Ainsi, l'incorporation, dans la composition d'émail de masse, d'un conducteur ionique « protonable » présentant une conduction ionique supérieure à 10⁻⁶ S.cm⁻¹ à 300°C, de préférence à une teneur comprise entre 2% et 25% en poids dans ladite composition, permet d'éviter les risques de coups d'ongle sur une tôle d'acier de nuance réputée non émaillable.

### Exemple 2 :

Cet exemple illustre la conduction protonique de couches d'émaux déposées sur des tôles d'acier selon l'invention.

Dans cet exemple, on évalue la conduction protonique de couches d'émaux par mesure de leur perméabilité à l'hydrogène.

Au delà de 300°C, une tôle d'acier est suffisamment perméable à l'hydrogène pour que l'on puisse effectuer la mesure de perméabilité de la couche d'émail directement sur l'acier, pourvu que l'épaisseur de la tôle d'acier reste assez faible (1 mm environ dans le cas présent).

On prépare des échantillons de tôle d'acier revêtus sur une seule face d'une seule couche d'émail de masse.

Pour l'émaillage, on utilise cette fois des compositions d'émaillage basées sur la même formule commerciale MS164 de l'exemple 1, mais présentant différentes proportions pondérales d'alumine β , β" : 0% pour l'échantillon témoin, 2%, 5%, 15% et enfin 25% comme dans l'exemple 1.

La composition d'émaillage est appliquée et cuite dans les mêmes conditions que dans l'exemple 1.

La face nue, non émaillée, de l'échantillon est ensuite légèrement polie de manière à éliminer la fine couche d'oxyde de fer qui s'est formée pendant la cuisson d'émaillage.

On vérifie que la couche d'émail de tous les échantillons obtenus est bien continue et étanche, en contrôlant l'absence de traces de corrosion sur la face émaillée après soumission pendant 100 heures à un test de brouillard salin selon la norme ISO 7253.

Sur un acier identique à celui de l'exemple 1, aucune des compositions d'émaillage dopée selon l'invention, c'est à dire contenant 2%, 5%, 15% ou 25% d'alumine β , β", n'a donné lieu à des défauts de coup d'ongle.

On conserve également un échantillon de tôle d'acier nu sur les deux faces.

On mesure ensuite la perméabilité à l'hydrogène de chaque échantillon, à une température au moins égale à 300°C ; dans ce domaine de température, on vérifie que la perméabilité à l'hydrogène de l'acier est bien supérieure à celle de la couche d'émail, de sorte que la mesure de perméabilité de l'échantillon, entre la face émaillée et la face nue, correspond à peu près bien à celle de la couche d'émail.

Le dispositif de mesure de perméabilité à l'hydrogène des échantillons de tôles comprend une enceinte cylindrique étanche placée dans un four ; l'échantillon à tester est placé au milieu de l'enceinte de manière à la séparer en deux compartiments A et B indépendants et étanches ; l'échantillon forme alors une cloison entre les deux compartiments A et B.

L'échantillon est placé de sorte que sa face d'entrée qui est la face nue soit en contact avec l'atmosphère du compartiment A et que sa face de sortie qui est la face émaillée soit en contact avec l'atmosphère du compartiment B.

Dans le compartiment B, on maintient une atmosphère comprenant de l'oxygène (02) et de l'hydrogène (H2) dans un ratio de pression partielle P(O2)/P(H2) constant au moyen d'un dispositif comprenant deux capteurs à oxygène et une pompe d'alimentation en oxygène.

Pour la mesure de perméabilité à l'hydrogène de l'échantillon, on introduit de l'hydrogène dans le compartiment A ; l'hydrogène pénètre alors dans le compartiment B par perméation à travers l'échantillon et réagit sur l'oxygène du compartiment B selon la réaction : H2 + ½ O2 -> H2O, ce qui provoque une réaction d'alimentation en oxygène du dispositif du compartiment B pour maintenir la pression partielle d'oxygène constante.

On obtient alors la valeur de débit H2 de perméation à partir de la quantité d'oxygène alimentant le compartiment B ; en tenant compte de la surface de l'échantillon, on en déduit la perméabilité à l'hydrogène à la température de consigne du four.

Les résultats obtenus à 300°C et à 475°C (= Tg) figurent au tableau I ; ces résultats illustrent l'influence du taux de dopant sur la perméabilité de la couche d'émail en deçà de sa température de transition vitreuse Tg ; on constate que, dès que la proportion en alumine β , β" est supérieure ou égale à 2% dans la composition d'émaillage, la perméabilité de la couche d'émail obtenue dépasse 10.⁻¹¹ g/cm2/s (gramme d'hydrogène par cm2 de surface de couche d'émail et par seconde).

D'après ces résultats, on constate que :
- la perméabilité mesurée sur une tôle nue est supérieure à celle des tôles émaillées selon l'invention ; la perméabilité de la tôle nue est donc suffisamment élevée pour pouvoir évaluer celle de la couche d'émail à partir de la mesure sur tôle émaillée.
- la perméabilité de l'échantillon témoin (tôle émaillée à l'aide d'une composition MS 164 non additivée de conducteur ionique) n'est pas mesurable, ce qui signifie qu'elle est inférieure à 10⁻¹¹ g.cm⁻².s⁻¹ entre 300°C et 475°C ; on comprend donc pourquoi l'hydrogène en sursaturation dans l'acier est bloqué par la couche d'émail solidifiée dans le cas d'une tôle émaillée sur les deux faces et provoque alors des coups d'ongle (cf. exemple 1).
- la perméabilité à l'hydrogène augmente sensiblement dès que la proportion en alumine β, β" est supérieure ou égale 2% en poids dans la composition d'émaillage.

**Tableau I -**

| Perméabilité H2 d'une couche d'émail en fonction % additif. | | | |
|---|---|---|---|
| **Perméabilité H2** | Teneur pondérale | Température de mesure | |
| ***10.***^{***-11***} ***g*/*cm***^{***2***}**/*s.*** | Alumine β , β" | 300°C | 475°C |
| Acier nu | sans objet | **100** | **100** |
| Acier émaillé | 0% | **<1** | **<1** |
| id. | 2% | **4** | **8** |
| id. | 5% | **6** | **13** |
| id. | 15% | **16** | **30** |
| id. | 25% | **20** | **80** |

Cet exemple illustre donc bien la conduction protonique de l'émail selon l'invention ; sans vouloir se limiter à une explication restrictive, il semble que la conduction protonique apparaisse dans l'émail par protonation du conducteur ionique - alumine β', β" - sous l'effet de l'hydrogène en cours de cuisson, cet hydrogène se substituant à des ions sodium du conducteur ionique pour le transformer en conducteur protonique.

Du côté de la face de la couche d'émail exposée à la plus forte pression partielle d'hydrogène, c'est à dire à l'interface tôle-émail, on a la réaction suivante : H₂ -> 2 H⁺ + 2 e⁻.

A l'inverse, du côté de la face de la couche d'émail exposée à la plus faible pression partielle d'hydrogène, c'est à dire à la surface externe de l'émail, on a la réaction suivante : 2 H⁺ + 2 e⁻ -> H₂ qui se dégage.

Ces deux réactions traduisent donc la perméabilité de la couche d'émail à l'hydrogène.

Pour que la perméation d'hydrogène ait bien lieu par conduction protonique au travers de la couche d'émail, la couche d'émail doit être suffisamment conductrice des électrons, ce qui se vérifie en pratique dans la gamme de température de perméation ; l'addition à la composition d'émail d'un produit minéral conducteur électronique (par exemple, de l'oxyde de zinc) s'avère donc inutile.

Il est particulièrement surprenant de constater que la perméabilité de la couche d'émail de 100 µm d'épaisseur environ dépasse 10⁻¹¹ g.cm⁻².s⁻¹ entre 300°C et la température de transition vitreuse de la phase vitreuse de l'émail alors même que la proportion pondérale en conducteur protonable à base d'alumine β, β" est inférieure ou égale à 25% en poids dans la composition d'émaillage ; en effet, cette proportion est inférieure au seuil dit de « percolation » .

Ce seuil de percolation est défini comme le seuil au delà duquel il existe, dans l'épaisseur de la couche d'émail, une densité importante de « chaînes » continues de grains de composé minéral conducteur par où les protons sont susceptibles de « diffuser ».

Puisqu'on observe quand même une perméabilité importante à l'hydrogène dans le cas où la proportion de composé conducteur protonique ou protonable dans la couche d'émail est inférieure au seuil de percolation, il semble que tout se passe comme si les protons étaient susceptibles de « diffuser » d'un grain de composé conducteur à l'autre dans l'épaisseur de la couche d'émail, au travers même de la phase vitreuse qui sépare ces grains.

## Revendications

1. Procédé d'émaillage d'une tôle d'acier nu à l'aide d'une composition à base d'une fritte vitreuse, **caractérisée en ce que** cette composition comprend au moins un composé minéral cristallisé qui est :
- stable aux températures usuelles de cuisson de vitrification de ladite composition, et
- conducteur protonique ou protonable de manière à présenter, à 300°C, une conductivité protonique supérieure à 10⁻⁶ S.cm⁻¹.

2. Procédé selon la revendication 1 **caractérisée en ce que** ledit composé conducteur protonable est choisi dans le groupe comprenant l'alumine β, β' ou β" et l'oxyde de gallium de structure β, β".

3. Procédé selon l'une quelconque des revendications 1 à 2 **caractérisée en ce que** la proportion pondérale dudit composé conducteur dans ladite composition est supérieure ou égale à 2%.

4. Procédé selon l'une quelconque des revendications 1 à 3 **caractérisée en ce que** la proportion dudit composé conducteur dans ladite composition est inférieure au seuil dit de « percolation ».

5. Procédé selon l'une quelconque des revendications 1 à 4 **caractérisée en ce que** la proportion pondérale dudit composé conducteur dans ladite composition est inférieure ou égale à 25%.

6. Tôle d'acier revêtue sur les deux faces d'une couche d'émail étanche comprenant une phase vitreuse dans laquelle sont dispersés des composés minéraux cristallisés, **caractérisée en ce que** l'un au moins desdits composés :
- présente, à 300°C, une conductivité protonique supérieure à 10⁻⁶ S.cm⁻¹, et
- est dispersé dans ladite phase vitreuse dans une proportion suffisante pour conférer à ladite couche d'émail une perméabilité à l'hydrogène supérieure à 10⁻¹¹ g.cm⁻².s⁻¹ dans la gamme des températures comprises entre 300°C et la température de transition vitreuse de ladite phase vitreuse.

7. Tôle selon la revendication 6 **caractérisée en ce que** ledit acier présente, selon la norme EN 10209 publiée en novembre 1996, une valeur de TH inférieure à 100.

8. Tôle selon l'une quelconque des revendications 6 ou 7 **caractérisée en ce que** ledit acier est choisi dans le groupe comprenant :
- les aciers dits « calmés aluminium », ne contenant pas de titane ni de niobium comme élément d'addition, dont la fabrication comprend une étape de laminage à chaud suivie d'un bobinage à une température inférieure à 600°C ;
- les aciers dits « calmés aluminium », contenant au plus 0,1% en poids de titane et/ou au moins 0,02% de niobium.

9. Tôle selon l'une quelconque des revendications 6 à 8 **caractérisée en ce que** l'au moins un composé conducteur protonique est choisi dans le groupe comprenant l'alumine β, β' ou β" et l'oxyde de gallium de structure β, β".

10. Tôle selon l'une quelconque des revendications 6 à 9 **caractérisée en ce que** la proportion pondérale de l'au moins un composé conducteur protonique dans ladite couche d'émail est supérieure ou égale à 2%.

11. Tôle selon l'une quelconque des revendications 6 à 10 **caractérisée en ce que** la proportion de l'au moins un composé conducteur protonique dans ladite couche d'émail est inférieure au seuil dit de « percolation ».

12. Tôle selon l'une quelconque des revendications 6 à 11 **caractérisée en ce que** la proportion pondérale de l'au moins un composé dans ladite couche d'émail est inférieure ou égale à 25%.

13. Procédé d'émaillage sur les deux faces d'une tôle d'acier nu selon l'une quelconque des revendications 1 à 5 qui comprend une étape de cuisson de vitrification de ladite composition d'émaillage appliquée sur la tôle **caractérisé en ce que** :
- la teneur en eau de ladite composition d'émaillage dépasse 1% en début de cuisson et/ou le point de rosée de l'atmosphère de cuisson est supérieur à 5°C ;
- la température atteinte par la tôle pendant ladite étape de cuisson dépasse Ac₁, Ac₁ étant la température de début de transformation de la ferrite en austénite dudit acier ;
- la vitesse de refroidissement de ladite tôle en fin de ladite étape de cuisson est supérieure à 10°C/min. dans l'intervalle de température compris entre la température Ar₁ et la température de transition vitreuse de ladite fritte, Ar₁ désignant la température de fin de transformation de l'austénite en ferrite dudit acier.

14. Procédé de préparation d'une tôle d'acier revêtue sur les deux faces d'une couche d'émail étanche selon l'une quelconque des revendications 6 à 12 à partir d'une composition d'émaillage adaptée pour former ladite couche, qui comprend une étape de cuisson de vitrification de ladite composition d'émaillage appliquée sur la tôle, **caractérisé en ce que** :
- la teneur en eau de ladite composition d'émaillage dépasse 1% en début de cuisson et/ou le point de rosée de l'atmosphère de cuisson est supérieur à 5°C ;
- la température atteinte par la tôle pendant ladite étape de cuisson dépasse Ac₁, Ac₁ étant la température de début de transformation de la ferrite en austénite dudit acier ;
- la vitesse de refroidissement de ladite tôle en fin de ladite étape de cuisson est supérieure à 10°C/min. dans l'intervalle de température compris entre la température Ar₁ et la température de transition vitreuse de ladite phase vitreuse, Ar₁ désignant la température de fin de transformation de l'austénite en ferrite dudit acier.

## Patentansprüche

1. Verfahren zum Emaillieren eines blanken Stahlblechs mit Hilfe einer auf einer Glasfritte beruhenden Zusammensetzung, **dadurch gekennzeichnet, dass** diese Zusammensetzung wenigstens eine kristallisierte Mineralverbindung aufweist, die:
- bei den zur Verglasung der Zusammensetzung üblichen Brenntemperaturen stabil ist und
- protonisch oder protonisierbar so leitfähig ist, dass sie bei 300°C eine protonische Leitfähigkeit von mehr als 1 Mikrosiemens/cm aufweist.

2. Verfahren nach Anspruch 1, **dadurch gekennzeichnet, dass** die protonisierbare leitfähige Verbindung aus einer Gruppe gewählt wird, die β-, β'- oder β"-Aluminiumoxid sowie Galliumoxid der Struktur β, β" umfasst.

3. Verfahren nach einem der Ansprüche 1 bis 2, **dadurch gekennzeichnet, dass** der Gewichtsanteil der leitfähigen Verbindung in der Zusammensetzung mindestens 2% beträgt.

4. Verfahren nach einem der Ansprüche 1 bis 3, **dadurch gekennzeichnet, dass** der Anteil der leitfähigen Verbindung in der Zusammensetzung unterhalb der sogenannten "Perkolations"-Schwelle liegt.

5. Verfahren nach einem der Ansprüche 1 bis 4, **dadurch gekennzeichnet, dass** der Gewichtsanteil der leitfähigen Verbindung in der Zusammensetzung höchstens 25% beträgt.

6. Stahlblech, das beidseitig mit einer dichten Emailschicht bedeckt ist, die eine Glasphase aufweist, in der kristallisierte Mineralverbindungen verteilt enthalten sind, **dadurch gekennzeichnet, dass** wenigstens eine der Verbindungen:
- bei 300°C einer protonische Leitfähigkeit von mehr als 1 Mikrosiemens/cm aufweist und
- in der Glasphase in einem Anteil enthalten ist, der ausreicht, der Emailschicht eine Wasserstoffdurchlässigkeit zu verleihen, die im Temperaturbereich zwischen 300°C und der Glasübergangstemperatur der Glasphase mehr als 10⁻¹¹ g/cm²/s beträgt.

7. Blech nach Anspruch 6, **dadurch gekennzeichnet, dass** der Stahl nach der im November 1996 veröffentlichten Norm EN 10209 einen TH-Wert von weniger als 100 aufweist.

8. Blech nach einem der Ansprüche 6 oder 7, **dadurch gekennzeichnet, dass** der Stahl aus einer Gruppe gewählt ist, die folgende Sorten umfasst:
- die sogenannten "aluminiumberuhigten" Stähle, die weder Titan noch Niob als Legierungsbestandteil enthalten und deren Herstellung einen Warmwalzschritt mit anschließender Aufwicklung bei einer unter 600°C liegenden Temperatur umfasst;
- die sogenannten "aluminiumberuhigten" Stähle, die höchstens 0,1 Gewichtsprozent Titan und/oder wenigstens 0,02% Niob enthalten.

9. Blech nach einem der Ansprüche 6 bis 8, **dadurch gekennzeichnet, dass** die wenigstens eine protonisch leitfähige Verbindung aus einer Gruppe gewählt ist, die β-, β'- oder β"-Aluminiumoxid sowie Galliumoxid der Struktur β, β" umfasst.

10. Blech nach einem der Ansprüche 6 bis 9, **dadurch gekennzeichnet, dass** der Gewichtsanteil der wenigstens einen protonisch leitfähigen Verbindung in der Emailschicht mindestens 2% beträgt.

11. Blech nach einem der Ansprüche 6 bis 10, **dadurch gekennzeichnet, dass** der Anteil der wenigstens einen protonisch leitfähigen Verbindung in der Emailschicht unterhalb der sogenannten "Perkolations"-Schwelle liegt.

12. Blech nach einem der Ansprüche 6 bis 11, **dadurch gekennzeichnet, dass** der Gewichtsanteil der wenigstens einen Verbindung in der Emailschicht höchstens 25% beträgt.

13. Verfahren zum beidseitigen Emaillieren eines blanken Stahlblechs, nach einem der Ansprüche 1 bis 5, mit einem Brennschritt zur Verglasung der auf dem Blech aufgebrachten Emaillierungszusammensetzung, **dadurch gekennzeichnet, dass**:
- der Wassergehalt der Emaillierungszusammensetzung zu Beginn des Brennens mehr als 1% beträgt und/oder der Taupunkt der Brennatmosphäre über 5°C liegt;
- die vom Blech während des Brennschritts erreichte Temperatur den Wert Ac₁ übersteigt, wobei Ac₁ die Temperatur ist, bei der der Stahl sich von Ferrit zu Austenit umzuwandeln beginnt;
- die Abkühlgeschwindigkeit des Blechs am Ende des Brennschritts mehr als 10°C/min beträgt, und zwar im Temperaturintervall zwischen der Temperatur Ar₁ und der Glasübergangstemperatur der Fritte, wobei Ar₁ die Temperatur bezeichnet, bei der die Umwandlung des Stahls von Austenit zu Ferrit endet.

14. Verfahren zum Herstellen eines beidseitig mit einer dichten Emailschicht bedeckten Stahlblechs nach einem der Ansprüche 6 bis 12, ausgehend von einer zur Bildung der Schicht angepassten Emaillierungszusammensetzung, mit einem Brennschritt zur Verglasung der auf dem Blech aufgebrachten Emaillierungszusammensetzung, **dadurch gekennzeichnet, dass**:
- der Wassergehalt der Emaillierungszusammensetzung zu Beginn des Brennens mehr als 1% beträgt und/oder der Taupunkt der Brennatmosphäre über 5°C liegt;
- die vom Blech während des Brennschritts erreichte Temperatur den Wert Ac₁ übersteigt, wobei Ac₁ die Temperatur ist, bei der der Stahl sich von Ferrit zu Austenit umzuwandeln beginnt;
- die Abkühlgeschwindigkeit des Blechs am Ende des Brennschritts mehr als 10°C/min beträgt, und zwar im Temperaturintervall zwischen der Temperatur Ar₁ und der Glasübergangstemperatur der Glasphase, wobei Ar₁ die Temperatur bezeichnet, bei der die Umwandlung des Stahls von Austenit zu Ferrit endet.

## Claims

1. Method of enamelling a bare sheet of steel with the aid of a composition based on a vitreous frit, **characterised in that** this composition comprises at least one crystallised mineral compound which is:
- stable at the usual firing temperatures for vitrification of the said composition, and
- a protonic or protonable conductor in such a way as to have, at 300°C, a protonic conductivity higher than 10⁻⁶ S.cm⁻¹.

2. Method as claimed in Claim 1, **characterised in that** the said protonable conductive compound is chosen from within the group comprising β, β' or β" alumina and gallium oxide of β, β" structure.

3. Method as claimed in any one of Claims 1 to 2, **characterised in that** the proportion by weight of the said conductive compound in the said composition is greater than or equal to 2%.

4. Method as claimed in any one of Claims 1 to 3, **characterised in that** the proportion of the said conductive compound in the said composition is below the so-called "percolation" threshold.

5. Method as claimed in any one of Claims 1 to 4, **characterised in that** the proportion by weight of the said conductive compound in the said composition is less than or equal to 25%.

6. Steel sheet coated on both faces with an impermeable layer of enamel comprising a vitreous phase in which crystallised mineral compounds are dispersed, **characterised in that** the at least one of the said compounds:
- has at 300°C a protonic conductivity higher than 10⁻⁶ S.cm⁻¹, and
- is dispersed in the said vitreous phase in a sufficient proportion to give the enamel layer a permeability to hydrogen greater than 10⁻¹¹ g.cm⁻².s⁻¹ in the range of temperatures between 300°C and the glass transition temperature of the said vitreous phase.

7. Sheet as claimed in Claim 6, **characterised in that** the said steel has, according to the standard EN 10209 published in November 1996, a TH value lower than 100.

8. Sheet as claimed in any one of Claims 6 or 7, **characterised in that** the said steel is chosen from within the group comprising:
- the so-called "aluminium-killed" steels which do not contain titanium nor niobium as addition element, the manufacture of which comprises a hot-rolling stage followed by winding at a temperature lower than 600°C;
- the so-called "aluminium-killed" steels containing at most 0.1% by weight of titanium and/or at least 0.02% of niobium.

9. Sheet as claimed in any one of Claims 6 to 8, **characterised in that** the at least one protonic conductor is chosen within the group comprising β, β' or β" alumina and gallium oxide of β, β" structure.

10. Sheet as claimed in any one of Claims 6 to 9, **characterised in that** the proportion by weight of the at least one protonic conductive compound in the said enamel layer is greater than or equal to 2%.

11. Sheet as claimed in any one of Claims 6 to 10, **characterised in that** the proportion of the at least one protonic conductive compound in the said enamel layer is below the so-called "percolation" threshold.

12. Sheet as claimed in any one of Claims 6 to 11, **characterised in that** the proportion by weight of the at least one compound in the said enamel layer is less than or equal to 25%.

13. Method of enamelling on both faces of a bare sheet of steel as claimed in any one of Claims 1 to 5, which comprises a firing stage for vitrification of the said enamelling composition applied to the sheet, **characterised in that**:
- the water content of the said enamelling composition exceeds 1% at the start of firing and/or the dew point of the firing atmosphere is higher than 5°C;
- the temperature reached by the sheet during the firing step exceeds Ac₁, Ac₁ being the temperature at the start of the transformation of the ferrite into austenite of the said sheet;
- the rate of cooling of the said sheet at the end of the said firing step is greater than 10°C/min in the temperature range between the temperature Ar₁ and the glass transition temperature of the said frit, Ar₁ denoting the temperature at the end of the transformation of the austenite into ferrite of the said steel.

14. Method of preparation of a sheet of steel coated on both faces with an impermeable layer of enamel, as claimed in any one of Claims 6 to 12, starting from an enamelling composition adapted to form the said layer, which comprises a firing stage for vitrification of the said enamelling composition applied to the sheet, **characterised in that**:
- the water content of the said enamelling composition exceeds 1% at the start of firing and/or the dew point of the firing atmosphere is higher than 5°C;
- the temperature reached by the sheet during the firing step exceeds Ac₁, Ac₁ being the temperature at the start of the transformation of the ferrite into austenite of the said sheet;
- the rate of cooling of the said sheet at the end of the said firing step is greater than 10°C/min in the temperature range between the temperature Ar₁ and the glass transition temperature of the said frit, Ar₁ denoting the temperature at the end of the transformation of the austenite into ferrite of the said steel.
